# EUROPÄISCHE PATENTSCHRIFT

(11) **EP 0 479 038 B1**
(45) Veröffentlichungstag und Bekanntmachung des Hinweises auf die Patenterteilung: **17.01.1996**
(21) Anmeldenummer: 91115796.4
(22) Anmeldetag: 18.09.1991
(51) Int. Cl.: G03B 27/62, G03B 1/32

(54) **Vorlagenbühne zur Führung von belichteten und entwickelten Filmstreifen**
Imaging frame for guiding exposed and developed film strips
Cadre d'images pour guider les bandes de film exposé et développé

(30) Priorität: 01.10.1990 DE 4031025
(43) Veröffentlichungstag der Anmeldung: 08.04.1992
(73) Patentinhaber: Agfa-Gevaert AG, D-51373 Leverkusen (DE)
(72) Erfinder: Benker, Gerhard, Dipl.-Ing., W-8023 Pullach (DE); Nagel, Erich, Dipl.-Ing., W-8011 Anzing (DE); Neudecker, Helmut, W-8000 München 90 (DE)

(56) Entgegenhaltungen:
- EP-A- 0 261 076
- EP-A- 0 434 583
- DE-A- 3 437 222
- DE-A- 3 737 788
- DE-B- 1 965 244
- FR-A- 2 343 674

## Beschreibung

Die Erfindung geht aus von einer Vorlagenbühne nach dem Oberbegriff des Hauptanspruchs.

Aus der DE-OS 34 37 222 ist eine Vorrichtung zum Kopieren von Filmstreifen bekannt. Bei dieser Vorrichtung wird der Anfang des Filmstreifens von einer Bedienperson in eine Aufnahme eingeschoben. Der Film wird von einem Antrieb erfaßt und über eine Scan-Station in einen Speicher geleitet. Nach der Berechnung der Bildpositions- und Belichtungsdaten wird der Film in entgegengesetzter Richtung wieder aus dem Speicher herausgezogen und die einzelnen Bilder in umgekehrter Reihenfolge einer Kopierstation zugeführt. Nach dem Kopiervorgang wird der Filmstreifen über die gleiche Transporteinrichtung, über die er eingezogen wurde, wieder ausgeworfen.

Geräte dieser Art werden häufig für die Bearbeitung von Nachbestellaufträgen verwendet. Zu jedem Filmstreifen, den die Bedienperson einlegt, kann sie gleichzeitig die entsprechenden Daten - wie Anzahl der Bilder und evtl. Farbkorrekturwerte - eingeben. Um jedoch den nächsten Filmstreifen einlegen und die dazugehörigen Daten in das Gerät eingeben zu können, muß die Bedienperson warten, bis der vorhergehende Filmabschnitt fertig vermessen, die entsprechenden Werte berechnet und der Kopiervorgang beendet ist. Erst wenn der Filmstreifen wieder ausgeworfen wurde, kann der nächste Filmstreifen eingeführt und können dessen Daten eingegeben werden.

Ähnliche Probleme ergeben sich bei der Bearbeitung von Diapositiven. Die Bedienungsperson muß das bereits bearbeitete Dia zuerst umständlich dem Vorlagenschieber entnehmen, bevor sie das nächste Dia einlegen kann.

Es ist die Aufgabe der Erfindung, Vorrichtungen der beschriebenen Art dahingehend zu verbessern, daß die Zeit, die zur Entnahme der bereits bearbeiteten Kopiervorlage benötigt wird, von der Bedienperson besser genutzt werden kann.

Die Aufgabe wird gelöst durch die Merkmale des Hauptanspruchs in bezug auf Filmstreifen und die des Anspruchs 8 in bezug auf Diapositive. Dadurch, daß der bearbeitete Filmstreifen an einer anderen Stelle des Geräts wieder ausgeworfen wird, kann die Bedienperson bereits während der maschinellen Bearbeitung den nächsten Filmstreifen in die Vorrichtung einführen und die dazugehörigen Daten eingeben. In vorteilhafter Weise ist die Eingabeöffnung für die Filmstreifen oberhalb der Ausgabeöffnung angeordnet. Die beiden Führungsbahnen werden noch vor der ersten Bearbeitungsstation in einem spitzen Winkel zusammengeführt, so daß es durch eine einfache Weichen-anordnung möglich ist, den Filmstreifen bei seinem Rücktransport richtig zur Ausgabeöffnung zu leiten. Diese Weiche kann als weiche Feder ausgebildet sein, die in ihrer Ruhestellung eine Position einnimmt, die für den Film bei seinem Rücktransport den Einzugskanal verschließt und ihn somit in den Ausfuhrkanal leitet. In Einzugsrichtung des Films wird die Feder vom Anfang des Filmstreifens zur Seite gedrückt und bildet so kein Hindernis. Bei einem bevorzugten Ausführungsbeispiel der Vorrichtung ist ein Motor vorgesehen, der ein Antriebsrollenpaar im Einzugschacht und ein Antriebsrollenpaar im Auswurfschacht - beispielsweise über einen Riemen - antreibt. Der Motor kann in beide Laufrichtungen geschaltet werden. Um zu verhindern, daß während des Auswurfvorganges des im Gerät befindlichen Filmstreifens bereits das Antriebsrollenpaar im Einzugschacht auf den nächsten Filmstreifen wirkt, ist diese Antriebsrolle mit einem Freilauf versehen.

Weitere Einzelheiten und Vorteile der Erfindung ergeben sich aus den Unteransprüchen im Zusammenhang mit der Beschreibung eines Ausführungsbeispiels, das anhand der Zeichnungen eingehend erläutert wird.

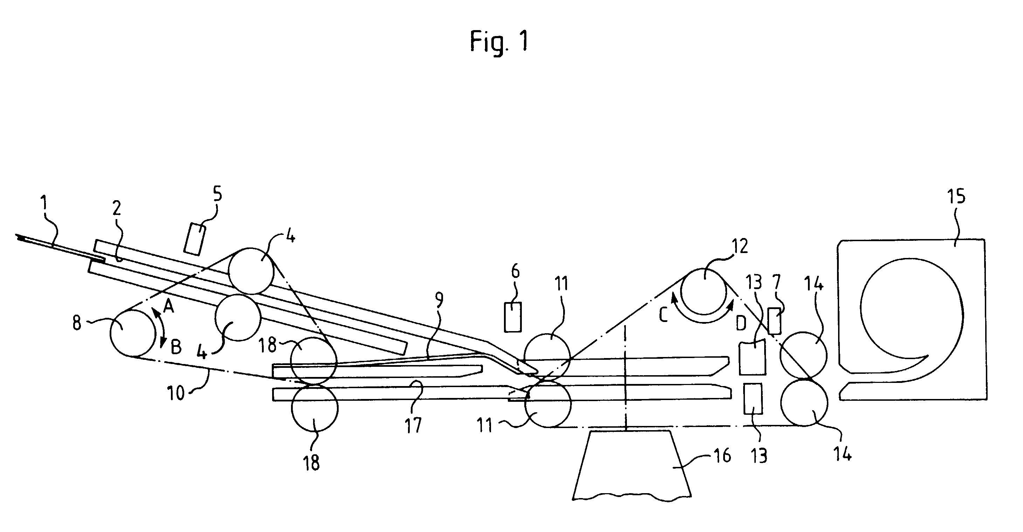

- Fig. 1: eine schematisierte Darstellung einer erfindungsgemäßen Vorlagenbühne für die Behandlung von Nachbestellungsaufträgen,
- Fig. 2: die Aufsicht auf den unteren Teil eines Abschnitts der erfindungsgemäßen Vorlagenbühne,
- Fig. 3: einen Schnitt entlang der Linie III-III in Fig. 2 und
- Fig. 4: eine schematische Darstellung eines Vorlagenschiebers für Diapositive.

Um Nachbestellaufträge bearbeiten zu können, wird der mit einem Tabberstreifen versehene Filmabschnitt 1 von der Bedienungsperson in den Einführschacht 2 der Vorlagenbühne eingeschoben. Kurz vor dem ersten Antriebsrollenpaar 4 befindet sich ein Signalgeber 5. Hierbei kann es sich in beliebiger Weise um einen Mikroschalter oder etwa eine Lichtschranke handeln. Durch den Signalgeber wird das Vorhandensein des Filmstreifens festgestellt und ein entsprechendes Signal an eine nicht dargestellte Steuereinheit gegeben. Liegt kein entsprechendes Signal von den Gebern 6 und 7 vor, so läuft der Antriebsmotor 8 in Richtung des Pfeiles A an. Der Geber 7 kann auch eingespart und das Signal direkt von dem Scanner 13 abgenommen werden. Über den Riemen 10 wird das Antriebsrollenpaar 4 angetrieben, welches den Filmstreifen 1 sodann einzieht. Die Feder 9 ist so weich ausgelegt, daß sie von dem auf ihr auftreffenden Filmstreifen nach unten gedrückt werden kann und somit den Film zu dem zweiten Antriebsrollenpaar 11 leitet. Sobald der Filmstreifen von dem Signalgeber 6 detektiert wird, läuft der Antriebsmotor 12 in Richtung des Pfeiles C an. Der Filmstreifen wird nun durch die Scan-Station 13 transportiert, in der die Transparenzwerte gemessen werden. Über das Transportrollenpaar 14 wird der Filmstreifen dann in den Speicher 15 geschoben. Sobald von dem Signalgeber 7 das Filmende festgestellt wird, schaltet der Motor 12 um und läuft in Richtung des Pfeiles D an. Der Film wird nun wieder aus dem Speicher 15 gezogen und über die Kopierstation 16 transportiert. Mit Hilfe der in der Scan-Station 13 ermittelten Positions- und Transparenzdaten werden hier die vom Kunden gewünschten Abzüge belichtet. Durch die Feder 9, die wie eine Weiche wirkt, ist für den Filmstreifen der Weg in den Einführschacht 2 versperrt und er wird durch das Antriebsrollenpaar 11 in den Auswurfschacht 17 geschoben. Wenn von dem Signalgeber 6 der Film erkannt wird, läuft der Motor 8 in Richtung des Pfeiles B an. Der Film wird vom Antriebsrollenpaar 18 erfaßt und ausgeworfen. Um das Antriebsrollenpaar 4 während der Auswurfphase nicht bereits in Betrieb zu setzen, ist bei einer Betriebsart des Motors 8 in Richtung des Pfeiles B ein Freilauf vorgesehen. Wird nun von dem Signalgeber 6 das Ende des auszuwerfenden Filmstreifens festgestellt, so schaltet nach einer vorherbestimmten Umdrehungszahl, die ausreicht, um den Filmstreifen ganz aus dem Auswurfschacht 17 zu befördern, der Motor 8 wieder um in Laufrichtung des Pfeiles A, so daß der nächste Filmstreifen eingezogen werden kann. Für den Fall, daß der bearbeitete Filmstreifen nach dem Auswerten so zu liegen kommt, daß er von dem Antriebsrollenpaar 18 wieder ergriffen werden könnte, ist hier ebenfalls ein Freilauf vorgesehen, der entgegengesetzt zum Freilauf des Antriebsrollenpaares 4 in Drehrichtung des Pfeiles A des Motors 8 wirkt. Da die Schaltung des Antriebs 8 nicht nur von dem Signalgeber 5, sondern auch von den beiden Signalgebern 6 und 7 abhängig ist, ist gewährleistet, daß der neue Filmstreifen immer erst dann eingezogen wird, wenn der vorhergehende Filmstreifen fertig bearbeitet und durch den Auswurfschacht 17 wieder ausgestoßen wurde. Dadurch besteht für die Bedienperson die Möglichkeit, sobald ein Filmstreifen eingezogen wurde, bereits den nächsten in den Einfuhrschacht 2 einzulegen, ohne daß er von dem Antriebswalzenpaar 4 sogleich erfaßt werden würde. In der Zeit, während der erste Filmstreifen durch die Scan-Station 13 in den Speicher 15 transportiert wird und während bei dem Zurücktransport über die Kopierstation 16 die gewünschten Abzüge gefertigt werden, kann die Bedienperson bereits die Daten für den nächsten Filmstreifen - wie z. B. Anzahl der Abzüge und evtl. Farbkorrekturwerte - in das Gerät eingeben. Gegenüber Vorrichtungen, bei denen der Filmstreifen über denselben Führungsschacht eingezogen und wieder ausgestoßen wird, bedeutet dies eine erhebliche Zeiteinsparung.

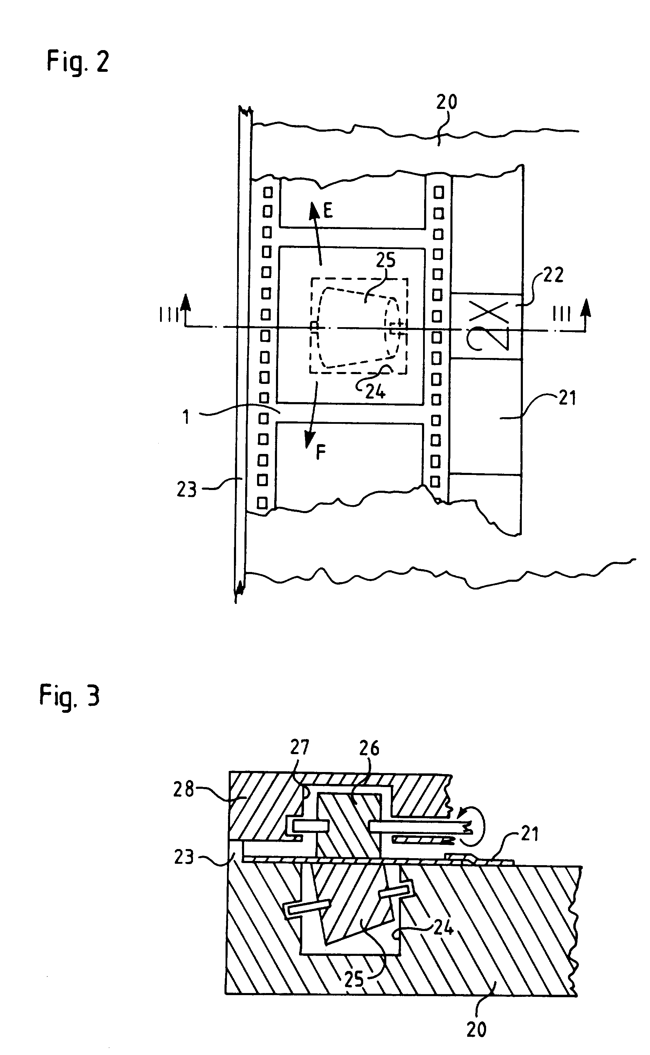

Die Ausbildung der Antriebsrollenpaare 4, 11 und 14 ist in den Fig. 2 und 3 näher beschrieben. Der Film 1 mit dem damit verbundenen Tabberstreifen 21 liegt auf der Unterlage 20 auf. Als Anschlag dient die einstückig mit der Unterlage 20 ausgebildete Gleitschiene 23. Auf dem Tabberstreifen 21, dessen Breite keine Rolle spielt, sind Felder 22 vorgesehen, auf denen der Kunde vermerken kann, welche Bilder er in welcher Anzahl wünscht. In dem Unterteil 20 ist eine Ausnehmung 24 vorgesehen, in der eine kegelstumpfförmige Rolle 25 gelagert ist. Die Rolle 25 ist so eingebaut, daß der Film 1 plan auf ihrer Mantelfläche aufliegt. Als Antriebsrolle dient die zylindrische Rolle 26. Sie ist in einer Ausnehmung 27 des Oberteils 28 gelagert. Der Film 1 sollte zwischen den beiden Rollen 25 und 26 in etwa immer mit gleicher Kraft beaufschlagt werden. Dies kann entweder durch eine elastische Verbindung zwischen dem Oberteil 28 und dem Unterteil 23 oder durch eine Anfederung einer der beiden Rollen 25, 26 realisiert werden.

Durch die Form und Lagerung der Rolle 25 ist der Film 1 bestrebt, abhängig von der Umdrehungsrichtung des Antriebsrollenpaares sich entweder in Richtung des Pfeiles E oder aber in Richtung des Pfeiles F zu bewegen. Beide Pfeile haben eine Komponente in Richtung der Gleitschiene 23. Dies bedeutet, daß der Film 1 immer bestrebt ist, sich in Anlage an der als Anschlag dienenden Gleitschiene 23 zu halten, unabhängig davon, ob er nun vorwärts oder rückwärts transportiert wird.

Um die beschriebene Wirkung zu erreichen, könnten auch zwei kegelstumpfförmige Rollen verwendet werden. In diesem Fall müßte jedoch auch die Antriebswalze schräg gelagert sein, was zu einem konstruktiven Mehraufwand führen würde.

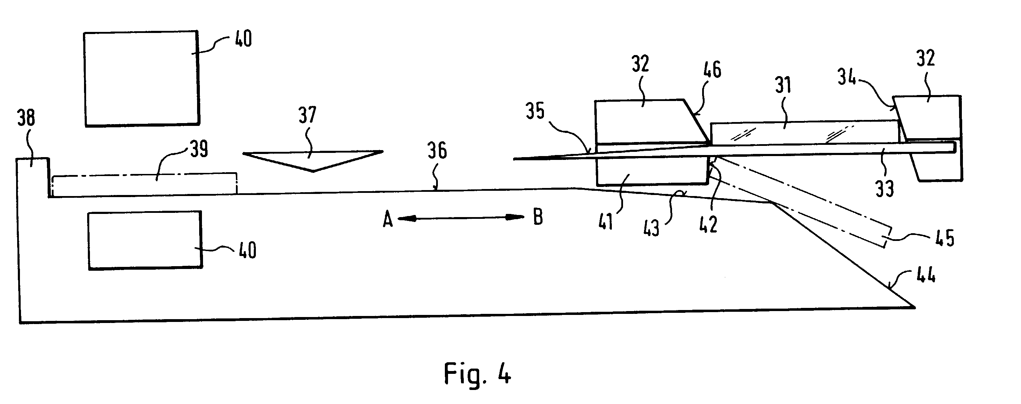

Fig. 4 zeigt eine Anordnung zur Bearbeitung von Diapositiven. Das Dia 31 wird in die Aufnahmeöffnung 46 des Schiebers 32 von der Bedienungsperson eingelegt und kommt dadurch auf eine erste Führungsplatte 33 zu liegen. Um das Dia während des Einschiebens in Anlage an die erste Führungsplatte 33 zu halten, ist die Kante 34 entsprechend schräg gestellt. Bewegt sich der Schieber 32 in Richtung des Pfeiles A, erreicht das Dia die schräg gestellte Fläche 35 der ersten Führungsplatte 33 und wird in seiner Bewegungsrichtung etwas in Richtung auf eine zweite Führungsplatte 36 zu geneigt. Das Führungselement 37 leitet das Dia endgültig auf die zweite Führungsplatte 36, wo es dann bis zum Anschlag 38 weitergeschoben wird. In der mit 39 bezeichneten Position wird das Dia durch die Scan- oder Kopiervorrichtung 40 bearbeitet. In dieser Position ist das Dia durch bekannte und nicht näher dargestellte Mittel zentriert.

Wird der Schieber 32 in Richtung des Pfeiles B zurückgezogen, greift der Fortsatz 41 hinter das Dia in der Position 39 und schiebt es in die gleiche Richtung. Auch hier ist die Kante 42 schräg gestellt, um das Dia auf seiner Unterlage zu halten. über die schräge Fläche 43 der zweiten Führungsplatte 36 wird das Dia dann in den Auswurfschacht 44 gefördert. In dieser Position ist das Dia mit 45 bezeichnet. Da die Aufnahmeöffnung 46 des Schiebers 32 beim Erreichen der Ausgangsposition bereits leer ist, kann die Bedienungsperson sofort das nächste Dia einlegen, ohne das bereits bearbeitete erst entfernen zu müssen.

## Patentansprüche

1. Vorrichtung zum Kopieren von belichteten und entwickelten Filmstreifen mit einer Kopier- und einer Scanstation und einer ersten Führungs- und Transporteinrichtung zur Führung der Filmstreifen durch die Kopier- und die Scanstation und zur Rückführung in umgekehrter Richtung, dadurch gekennzeichnet, daß eine zweite Führungs- und Transporteinrichtung (2, 4) mit einem Einführschacht (2) vorgesehen ist, die so ausgestaltet ist, daß in den Einführschacht (2) eingelegte Filmstreifen bis zu der ersten Führungs- und Transporteinrichtung (11, 14, 20, 28) gefördert werden und daß eine dritte Führungs- und Transporteinrichtung (17, 18) mit einem Auswurfschacht (17) vorgesehen ist, die so ausgestaltet ist, daß von der ersten Führungs- und Transporteinrichtung rückgeführte Filmstreifen aufgenommen und aus dem Auswurfschacht (17) abtransportiert werden.

2. Vorrichtung nach Anspruch 1, dadurch gekennzeichnet, daß die zweite und dritte Führungs- (2, 17) und Transporteinrichtung (4, 18) so angeordnet sind, daß sich die Bahnen, in denen die Filmstreifen geleitet werden, in einem spitzen Winkel treffen.

3. Vorrichtung nach Anspruch 2, dadurch gekennzeichnet, daß die zweite und dritte Führungs- (2, 17) und Transporteinrichtung (4, 18) übereinander angeordnet sind.

4. Vorrichtung nach Anspruch 3, dadurch gekennzeichnet, daß im Berührungsbereich der Bahnen, in denen die Filmstreifen geleitet werden, eine Weiche (9) vorgesehen ist, die während des Rücktransportes der Filmstreifen (1) die zweite Führungs- (2) und Transporteinrichtung (4) verschließt.

5. Vorrichtung nach Anspruch 4, dadurch gekennzeichnet, daß die Weiche (9) als Feder ausgebildet ist, die die zweite Führungs- (2) und Transporteinrichtung (4) in ihrer Ruhelage verschließt.

6. Vorrichtung nach Anspruch 1, dadurch gekennzeichnet, daß der zweiten (2) und dritten (17) Führungseinrichtung je ein Antriebsrollenpaar (4, 18) zugeordnet ist und beide Antriebsrollenpaare von demselben Motor (8) antreibbar sind.

7. Vorrichtung nach Anspruch 6, dadurch gekennzeichnet, daß der Motor (8) zum Einziehen und Auswerfen der Filmstreifen (1) in verschiedene Umdrehungsrichtungen schaltbar ist und daß der Antriebsrolle der zweiten Transport- (4) und Führungseinrichtung (2) in Auswurfrichtung ein Freilauf zugeordnet ist.

8. Vorrichtung zum Kopieren und/oder Scannen von gerahmten Diapositiven mit einer Kopier- und/oder Scanstation und einer ersten Führungseinrichtung zur Führung der Diapositive durch die Kopier- und/oder Scanstation und zur Rückführung in umgekehrter Richtung, dadurch gekennzeichnet, daß eine zweite Führungseinrichtung (35) mit einer Aufnahmeöffnung (46) vorgesehen ist, die so ausgestaltet ist, daß in die Aufnahmeöffnung (46) eingelegte Diapositive (31) bis zur ersten Führungseinrichtung (36, 37) gefördert werden und daß eine dritte Führungseinrichtung (43) mit einem Auswurfschacht (44) vorgesehen ist, die so ausgestaltet ist, daß von der ersten Führungseinrichtung (36, 37) rückgeführte Diapositive (45) aufgenommen und in den Auswurfschacht (44) gefördert werden.

9. Vorrichtung nach Anspruch 8, dadurch gekennzeichnet, daß die zweite (35) und die dritte (43) Führungseinrichtung übereinander angeordnet sind und in spitzem Winkel zusammenlaufen.

10. Vorrichtung nach Anspruch 9, dadurch gekennzeichnet, daß ein Führungselement (37) vorgesehen ist, das die Diapositive (31) während des Einschiebens zwangsweise aus der Ebene der ersten Führungseinrichtung (35) in die Ebene der zweiten Führungseinrichtung (43) umsteuert.

## Claims

1. Device for copying exposed and developed film strips having a copying station and a scanning station and a first guiding and transporting device for guiding the film strips through the copying station and the scanning station and for returning in the opposite direction, characterised in that a second guiding and transporting device (2, 4) having a feeding chute (2) is provided, the second guiding and transporting device (2, 4) being designed so that film strips placed in the feeding chute (2) are transported to the first guiding and transporting device (11, 14, 20, 28), and that a third guiding and transporting device (17, 18) having a delivery chute (17) is provided, the third guiding and transporting device (17, 18) being designed so that film strips returned from the first guiding and transporting device are received and transported from the delivery chute (17).

2. Device according to claim 1, characterised in that the second and third guiding (2, 17) and transporting (4, 18) devices are arranged so that the guideways in which the film strips are routed meet at an acute angle.

3. Device according to claim 2, characterised in that the second and third guiding (2, 17) and transporting (4, 18) devices are arranged one above the other.

4. Device according to claim 3, characterised in that a switch (9) is provided in the region of contact between the guideways in which the film strips are routed, the switch (9) closing the second guiding (2) and transporting (4) device during the return transportation of the film strips (1).

5. Device according to claim 4, characterised in that the switch (9) is designed as a spring that closes the second guiding (2) and transporting (4) device in its resting position.

6. Device according to claim 1, characterised in that a pair of driving rollers (4, 18) is allocated to each of the second (2) and third (17) guiding devices and both pairs of driving rollers are drivable by the same motor (8).

7. Device according to claim 6, characterised in that the motor (8) is switchable to various directions of rotation for drawing in and delivering the film strips (1) and that a freewheel is allocated to the driving roller of the second transporting (4) and guiding (2) device in the delivery direction.

8. Device for copying and/or scanning framed negatives having a copying and/or scanning station and a first guiding device for guiding the negatives through the copying and/or scanning station and for returning in the opposite direction, characterised in that a second guiding device (35) having a receiving opening (46) is provided, the second guiding device (35) being designed so that negatives (31) placed in the receiving opening (46) are transported to the first guiding device (36, 37), and that a third guiding device (43) having a delivery chute (44) is provided, the third guiding device (43) being designed so that negatives (45) returned from the first guiding device (36, 37) are received and transported into the delivery chute (44).

9. Device according to claim 8, characterised in that the second (35) and the third (43) guiding devices are arranged one above the other and run together at an acute angle.

10. Device according to claim 9, characterised in that a guiding element (37) is provided which, during insertion, reroutes the negatives (31) in a forced manner out of the plane of the first guiding device (35) and into the plane of the second guiding device (43).

## Revendications

1. Dispositif pour copier des bandes de film exposées et développées, comportant une station de copiage et de balayage et un premier dispositif de guidage et de transport pour le guidage des bandes de film à travers la station de copiage et de balayage et pour leur retour en direction inverse, caractérisé en ce qu'il est prévu un second dispositif de guidage et de transport (2, 4) comprenant un canal d'introduction (2), ledit second dispositif étant réalisé de telle sorte que les bandes de film introduites dans le canal d'introduction (2) sont transportées jusqu'au premier dispositif de guidage et de transport (11, 14, 20, 28), et en ce qu'il est prévu un troisième dispositif de guidage et de transport (17, 18) comprenant un canal d'éjection (17), ledit troisième dispositif étant réalisé de telle sorte que les bandes de film ramenées par le premier dispositif de guidage et de transport sont saisies et transportées hors du canal d'éjection (17).

2. Dispositif selon la revendication 1, caractérisé en ce que le second et le troisième dispositif de guidage (2, 17) et de transport (4, 18) sont agencés de telle sorte que les voies dans lesquelles sont guidées les bandes de film se rejoignent sous un angle aigu.

3. Dispositif selon la revendication 2, caractérisé en ce que le second et le troisième dispositif de guidage (2, 17) et de transport (4, 18) sont agencés l'un au-dessus de l'autre.

4. Dispositif selon la revendication 3, caractérisé en ce qu'il est prévu, dans la région de contact des voies, dans lesquelles sont guidées les bandes de film, un aiguillage (9) qui referme le second dispositif de guidage (2) et de transport (4) pendant le transport en retour de la bande de film (1).

5. Dispositif selon la revendication 4, caractérisé en ce que l'aiguillage (9) est réalisé sous la forme d'un ressort qui referme le second dispositif de guidage (2) et de transport (4) dans sa position de repos.

6. Dispositif selon la revendication 1, caractérisé en ce qu'une paire de galets d'entraînement (4, 18) est associée respectivement au second (2) et au troisième (17) dispositif de guidage, et en ce que les deux paires de galets d'entraînement peuvent être entraînées par le même moteur (8).

7. Dispositif selon la revendication 6, caractérisé en ce que le moteur (8) peut être commuté dans différentes directions de rotation pour l'introduction et l'éjection des bandes de film (1), et en ce qu'une roue libre est associée en direction d'éjection au galet d'entraînement du second dispositif de transport (4) et de guidage (2).

8. Dispositif pour copier et/ou pour scanner des diapositives encadrées, comportant une station de copiage et/ou de balayage et un premier dispositif de guidage pour le guidage des diapositives à travers la station de copiage et/ou de balayage et pour leur guidage en retour en direction inverse, caractérisé en ce que qu'il est prévu un second dispositif de guidage (35) comprenant une ouverture de réception (46), ledit second dispositif étant réalisé de telle sorte que les diapositives (31) posées dans l'ouverture de réception (46) sont transportées jusqu'au premier dispositif de guidage (36, 37), et en ce qu'il est prévu un troisième dispositif de guidage (43) comprenant un canal d'éjection (44), ledit troisième dispositif étant réalisé de telle sorte que les diapositives (45) ramenées par le premier dispositif de guidage (36, 37) sont saisies et transportées dans le canal d'éjection (44).

9. Dispositif selon la revendication 8, caractérisé en ce que le second (35) et le troisième (43) dispositif de guidage sont agencés l'un au-dessus de l'autre et se rejoignent sous un angle aigu.

10. Dispositif selon la revendication 9, caractérisé en ce qu'il est prévu un élément de guidage (37) qui renvoie de façon forcée les diapositives (31) pendant l'introduction hors du plan du premier dispositif de guidage (35) dans le plan du second dispositif de guidage (43).
